# EUROPEAN PATENT APPLICATION

(11) **EP 2 711 877 A1**
(43) Date of publication of application: **26.03.2014**
(21) Application number: 13004347.4
(22) Date of filing: 04.09.2013
(51) Int. Cl.: G06Q 10/06

(54) **Systems and methods for data privacy and destruction in multi-system landscapes**

(30) Priority: 20.09.2012 US 201213623407
(71) Applicant: SAP AG, 69190 Walldorf (DE)
(72) Inventor: Sarferaz, Siar, 69190 Walldorf (DE)
(74) Representative: Müller-Boré & Partner Patentanwälte PartG mbB

(57) **Abstract**

A method for managing personal data access in a multi-system landscape includes receiving at a first system in the multi-system landscape an end-of-purpose check result for a personal data record associated with a particular business partner, identifying other systems of the multi-system landscape that perform operations for the particular business partner if the end-of-purpose check result indicates a start-of retention-time, transmitting requests to each of the identified systems to synchronously perform an end-of-purpose check of local personal data records associated with the particular business partner, and receiving end-of-purpose check results from each of the identified systems. The method further can include initiating a global blocking process for the particular business partner. A system for implementing the method and a non-transitory computer readable medium are also disclosed.

## Description

### BACKGROUND

Companies must adhere to data privacy laws for personal data. A core requirement of data privacy is to use personal data only for particular business purposes and to erase them as soon as possible. Often personal data cannot be erased because of regulations regarding legal retention periods. When legal retention periods apply, retained personal data has to be blocked to restrict access to this data. After the retention period, the personal data may be deleted.

To comply with data privacy laws, processes for blocking access to personal data after residence time, and erasure from both a database and any archiving system after retention time must be done. Requirements concerning dependencies between the business partner and the enterprise application components and multi-system aspects must also be followed.

### BRIEF DESCRIPTION OF THE DRAWINGS

Figure 1 depicts a timing diagram in accordance with some embodiments;

Figure 2 depicts a system in accordance with some embodiments;

Figure 3 depicts a process in accordance with some embodiments;

Figure 4 depicts a process in accordance with some embodiments; and

Figure 5 depicts a data model structure in accordance with some embodiments.

### DETAILED DESCRIPTION

Presented are systems and methods that implement legal requirements for the destruction of personal data on an enterprise multi-system computer landscape. Processes provide for the blocking of business partner records after the elapse of a residence time and for the erasure of business partner records in the enterprise's database and archive after retention time expires. In accordance with embodiments these processes are conducted synchronously or asynchronously to minimize system overhead, as described below

There can be legal requirements that cause compliant companies to treat personal data with special care. These legal requirements can permit companies to use personal data only for particular business purposes (e.g., order fulfillment) and to erase personal data as soon as it is not required anymore for the particular purpose (e.g., after 2 years when warranty is expired).

However, there can be conflicting regulations between privacy laws and other laws, codes, and/or regulations that a company must follow. For example, in many jurisdictions personal data should not be erased because of regulations in the form of legal retention periods (e.g., keep invoice documents 10 years for audit purposes). When there are conflicting legal retention periods applied to the personal data, embodying systems and methods described below block access to the personal data as the business purpose expires. 'Blocking' means to restrict access to personal data and to prevent personal data to be used on a regular base. Only a few privileged users can have further access - such as data privacy officers or auditors.

An amalgamation of these legal requirements can result in a company's collection and usage of personal data to be within certain boundaries, for example:

1. Companies can store and use personal data only if they need this data to fulfill clear business purposes (e.g., fulfillment of orders or contracts, the consumer has explicitly agreed to receive newsletters, etc.).

2. Strict privacy laws can require a company to erase personal data as soon as there is no longer a need to fulfill a business purpose. Erasure is defined to be the process that makes stored personal data unrecognizable and unreadable. After erasure of personal data it is not possible to identify either the particular person directly or using other data which identifies the particular person. The erasure of personal data with the intention to destroy information is also called destruction or deletion. In the context of data privacy the terms "erasure," "destruction," "destroy," and "deletion" are used as synonymous terms. In compliance with the privacy laws, personal data should be erased if there is no purpose which requires the storage and usage of personal data, or if the storage of personal data is ineligible

3. If erasure is not an option (e.g. due to legal retention period requirements) to be in compliance with privacy laws a company should block personal data until the end of the legal retention period. Blocking means to restrict the access to, and the usage of, stored personal data. To implement compliant blocking, laws and regulations may require that a company:

a) Restrict access to personal data to authorized staff only;

b) Prohibit the processing of personal data after blocking;

c) Allow unblocking of personal data in exceptional cases only.

Against this legal background embodying systems and methods provide a data privacy information lifecycle management tool for enterprises to comply with the various laws and regulations governing the retention of information. Information lifecycle management means managing a company's business data along its entire lifecycle - from the time it is created in the application system, through its long-term storage in a storage system, until its final destruction at the end of its lifecycle.

A business partner (BP) data management component can manage business partner data and relationship data that are relevant in the business process(es) and application(s). Within the system a business partner is represented by software objects representing persons, organizations, or groups of business partners. The BP data management component can include an end-of-purpose interface component that performs verification of whether an application has reached its end-of-purpose for personal data records associated with a particular business partner.

The BP data management component can be in communication with a database that stores records associated with the business partners. These business partner records can include data fields containing names, addresses (e.g., office, home), roles (e.g., contact person, employee, title), personal circumstances (e.g., marital status, custody), role in business process(es) (e.g., prospect, customer, vendor), communication identifiers (e.g., telephone number(s), fax numbers, e-mail address(es)), and perhaps other identifiers that can be used to identify a person. Under the data privacy laws, this information can be viewed as personal data.

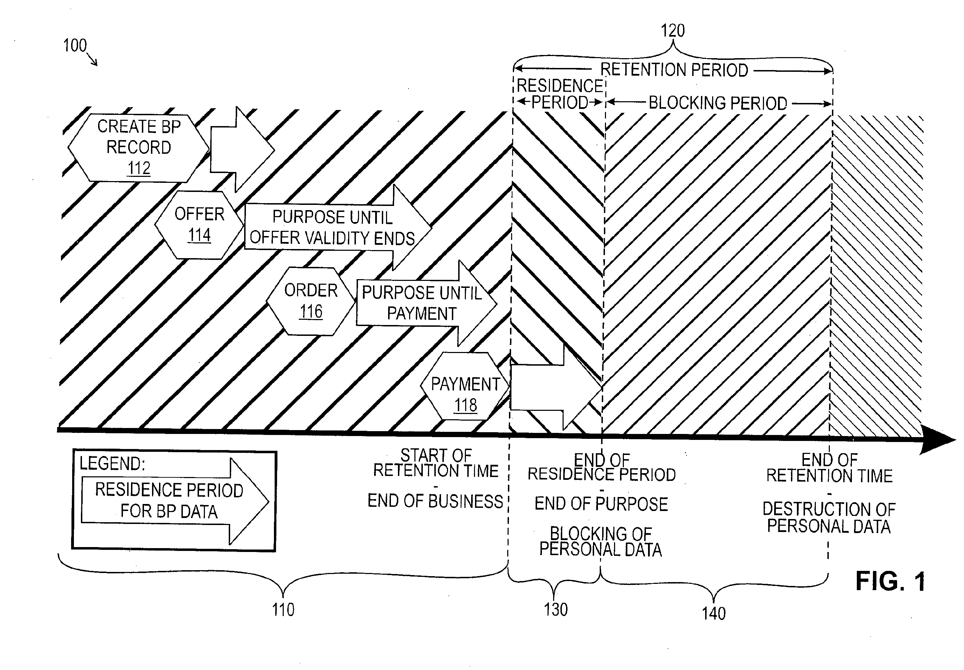

Figure 1 depicts a timing diagram illustrating information lifecycle 100 for business data in accordance with an embodiment. Information lifecycle 100 can include data usage period 110, retention period 120 that can include residence period 130 and blocking period 140. The interrelation of these periods is illustrated in Fig. 1. The data usage period begins with the creation of a BP data record 112 (for example, in the BP data management component). Next an offer 114, or other business purpose, can be extended to the business partner. There can be a valid reason to retain personal data until the business purpose expires. If the offer is accepted and an order 116 is placed, the personal data can still be retained. Once payment 118 is received, the validity of retaining the personal data can expire. As can be seen from Fig. 1, data usage period 110 can begin with the creation of a BP data record and can terminate with when the business purpose is over.

In some situations the data usage period can begin prior to the creation of a BP data record. For example, in advance of starting a marketing campaign a contact list for prospective customers can be procured. There can be a limited time to retain the contact information for a prospect to show interest. Once interest is indicated, a BP record can be created.

Retention period 120 for a business partner data record is the period of time after the data usage period expires through to when that business partner data should be erased from the database or archive. Residence period 130 can be the period of time that elapses before an end-of-purpose date can be determined and the business partner data can be blocked in the database or archived (i.e., the beginning of blocking period 140). During the residence period the business partner data can remain in the database, data can be changed and new business can be created.

Fig. 1 also depicts other information lifecycle events such as start-of-retention time (SoRT) which can begin at the end of data usage period 110, an end-of-purpose time (EoP) which can occur at the expiration of residence period 130, and end-of-retention time (EoRT) which can occur at the end of blocking period 140.

There are dependencies between the BP data record and enterprise applications. Business partner data can be stored in the database associated with business objects such as business partner, sales order, article, contract, purchase order, material, payment, bank account, loan contract etc. The business objects can represent a specific view of well defined and outlined business content. The business objects can be classified for example into master data such as business partner, article or material and transactional application data objects. Business objects can 'use' other business objects. For example a sales order can refer to a business partner as customer, a sales order item can refer to a an article, a bank account can refer to a business partner as an account holder, and a payment order can refer to a receiver account.

When it comes to blocking, archiving, and destruction of expired personal data the dependencies between the business objects and the applications using the records need to be taken into account. For example a business partner object can only be blocked or archived if applications using the object do not need the business partner's record anymore because, by way of example, business activity with the real world business partner is completed and residence period 130 has ended.

Determining access status to personal data can be made during data usage period 110 where a check is made to determine if there is still a business purpose for accessing the data. This check can be done by each application, and determination can be based on that application's specific needs to access the personal data. If there is a business purpose, periodic checks can be made to determine if there is a continuing reason for valid access.

If there is not a valid business purpose for an application to have access to the personal data, access to the personal data is blocked for at least that application. This block can be determined from various parameters that can be application centric as well as based on jurisdictional requirements or even customer preference. The block can be achieved by setting a business completion flag associated with the BP object or data record. During residence period 130, access to BP records containing privacy data can be provided to general business personnel having a business purpose. During blocking period 140 access to BP records is restricted to authorized personnel such as a corporate data privacy officer or IT staff (should it be necessary to correct access to an incorrectly blocked record).

A check is made to determine if a retention period applies for this data record. Information lifecycle management rules that are based on various parameters can be utilized to make this determination. If a retention period applies, periodic checks are made to determine whether the retention period has ended. If the retention period has expired, the data is destroyed.

If no retention period is applicable, the data is destroyed. Data destruction can follow predetermined methods that may be customized according to the nature of the data, the application that no longer has a business purpose for this data record, and the nature of the medium on which the data is stored.

Enterprises can setup multiple systems in order to deploy applications that support their business processes. For example a CRM (customer relationship management) instance can be used to support processes in the area of sales & services such as marketing campaigns and new business origination, while an ERP (enterprise resource planning) instance can be used to run sales order execution, materials management and accounting. Specific industries might have use of further applications and systems. In banking, for example, systems can be set up according to lines of business such as account management (cash and savings accounts) or loan management (consumer loans, mortgage loans, business loans).

The various instances running in an enterprise's multi-system landscape can have a need to access the same BP software objects and data records. Under a multi-system landscape scenario business partner data can be synchronized via replication between two systems. This synchronized business partner data can be used by applications deployed in systems one and two. Embodying systems and methods manage the information lifecycle of personal data in multi-system landscapes by taking into account the overlapping data access by the various applications and systems. In accordance with one embodiment, a system landscape that consists only of one system is seen as a specific case covered by the more general case of a multi-system landscape.

Systems and methods in accordance with one or more embodiments can implement algorithms in accordance with one or more of the following data privacy scenarios:

(1) Blocking access to business partner data after residence time - a data manager blocks business partner data after residence time in a way that only a few privileged users can access this data. These privileged users can include an enterprise's data privacy officer or IT personnel.

(2) Erasure of business partner data from database after retention time - a data manager erases business partner data in database after retention time.

(3) Erasure of archived business partner data after retention time - a data manager erases archived business partner data in archive store after retention time.

(4) The cases of items (1) - (3) applied for multi-system landscapes.

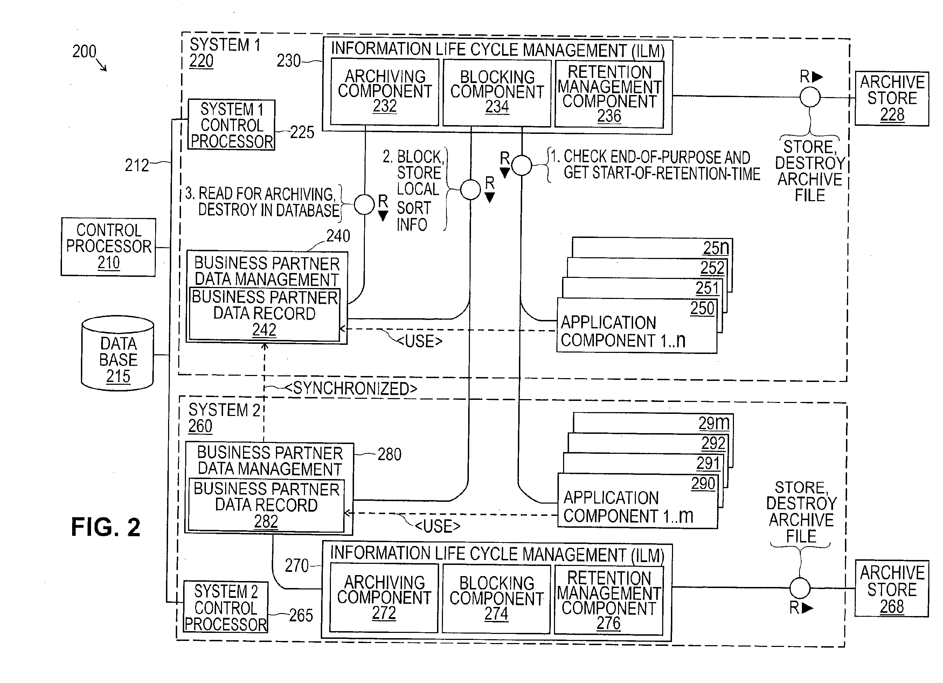

Figure 2 depicts system 200 for implementing personal data destruction scenarios in accordance with one or more embodiments. System 200 can include central controller, or central processor, unit 210 which can be a processing unit, a field programmable gate array, discrete analog circuitry, digital circuitry, an application specific integrated circuit, a digital signal processor, a reduced instruction set computer processor, etc. Processor unit 210 can interconnect and communicate with other components of system 200 via electronic communication network 212. In an embodiment processor unit 210 can be located remotely, for example as a remote server. Electronic communication network 212 can be the Internet, a local area network, a wide area network, a virtual private network, a wireless area network, or any other suitable configuration of an electronic communication network.

System 200 may include internal memory connected to processor unit 210. Internal memory for convenience represents both volatile and non-volatile memory devices. External memory may be connected to processor unit 210 via an input/output (I/O) port. Processor unit 210 may access a computer application program stored in internal memory, or stored in external memory. The computer program application may include code or executable instructions that when executed may instruct or cause processor unit 210 to perform methods discussed herein such as one or methods embodying the personal data retention and destruction scenarios discussed herein. Dedicated hardware, software modules, and/or firmware can implement the components of system 200.

In accordance with some embodiments, system 200 can include multiple enterprise computing systems 220, 260 to form a multi-system landscape. The enterprise multi-system landscape can include more than the two enterprise computing systems depicted in Fig. 2. Each of the multi-system computing landscapes can include a control processor 225, 265 which control their respective computing systems and communicate with other enterprise computing systems in the multi-system landscape. In such embodiments, one of computing systems 220, 260 can be designated as a master system, and other systems can be designated as client systems. The control processor for the designated master system can act as the system controller for the data privacy and destruction scenarios described herein. Where there is a master system designated, the attributes of processor unit 210 described herein should be understood to be within the capabilities of the master system's control processor.

Enterprise computing systems 220, 265 can each include information lifecycle management (ILM) component 230, 270, business partner data management component 240, 280, and one or more applications components 250 - 25n, 290 - 29m.

Control processors 225, 265, and other components of systems enterprise computing systems 220, 265, can be coupled to archive stores 228, 268. Each of the archive stores can be separate datastores, or can be implemented as partitions of a single datastore.

Database 215 can contain definitions of retention rules, residence rules, and rule variants that are based on data privacy requirements. In one embodiment, the archive stores and database 215 can be implemented in the same physical datastore. The rule variants can be used to analyze business partner records where the business is conducted in multiple jurisdictions having different data privacy requirements. Rule variants can be applied to relevant business partner records together with the retention rules and residence rules to calculate residence-time-period or retention-time-period. Accordingly, in one embodiment the application or implementation of retention rules and residence rules can include rule variants.

ILM component 230, 270 can support the definition and validation of retention and residence rules. Basic processes for archiving and erasure of business objects are provided by the ILM component. Archiving object component 232, 272 can implement processes that archive ILM objects, which can be logical objects of related business data that are relevant for archiving and erasure. Blocking component 234, 274 can prepare blocking of data by checking for EoP, and reviews block and unblock requests. Archiving object component 232, 272 can archive information lifecycle management objects and include a report component that can process an archive/save object request and produce a report on whether data is to be written to archive store 228, 268. A report can include whether block and/or unblock requests can be accommodated. Retention management component 236, 276 can implement the customization of residence rules and retention time rules for one or more of application components 250 - 25n, 290 - 29m. The retention management component can calculate whether end-of-residence-time has been reached for personal data or end-of-retention-time (EoRT) has arrived for the blocked data.

Business partner data management component 240, 280 can support status management of personal data and relationship data for one or more business partners. For each BP, an EoP interface component can be provided. The EoP interface component can perform an end-of-purpose check to verify if the EoP has been reached for a particular set of personal data. Business partner data management component 240, 280 can provide a registration customizing component that can be implemented for each BP to create custom interfaces for each application that accesses that particular BP's records in the database (or archive). These customized interfaces account for whether residence time 130 is ongoing or expired for that BP based on the perspective of that particular application's data usage. These customized interfaces can return a start-of-retention-time date (SoRT) for later retention time calculation.

Business partner data management component 240, 280 can also provide archiving and deletion events for the database records associated with the business partner. In the lifecycle of a business partner these events represent different points of time and have the following semantic: ARCH1 = Check data for dependencies; ARCH2 = Archive business partner header data; ARCH3 = Archive business partner dependent data; ARCH4 = Delete header and dependent data in database; and DELE1 = Check whether business partner can be deleted.

Application component(s) that use business partner data in their processes support and implement business partner data destruction scenarios due to the application's use and dependency on the BP data usage. For example, purchase order or bank account data can depend on business partner. The end-of-purpose check and the determination of start-of-retention-time can be application specific and can vary from application to application. Therefore the end-of-purpose check is customized to be specific for each application components. The checks can address the restriction of access implemented for business partner personal data that has been blocked after residence time. The checks can also implement the archiving and deletion events described above.

The ILM component, the business partner management component, and the application component(s) implement one or more of the four data privacy scenarios listed above.

In accordance with an embodiment, systems and methods support data destruction scenarios in a multi-system landscape. Business partner data can be maintained in the business partner master system and replicated to client systems. Business partner data cannot be erased in the master system even though all the applications residing in the master system have no business purpose until a check is made of the client systems. This is because client systems might still have an ongoing business purpose for the business partner data record. If this multi-system dependency is not addressed before erasing business partner data records, data inconsistencies can result in the system landscape. Prior to erasure of a business partner data record in a multi-system landscape, a check is done to ensure that the data usage purpose is completed in master and client systems.

In multi-system landscapes business partner records are synchronized among master and client systems. Business processes are spread over several systems. Therefore before a business partner data record can be erased, the EoP must be reached for each application in all involved systems. Erasing a business partner data record if end-of-purpose is reached in only some involved systems could result in data and process inconsistencies.

Blocking business partner personal data in a multi-system landscape can be performed at the master system. For a set of selected business partners, the end-of-purpose is checked first locally in the master system. If there is no longer a data usage purpose by the applications in the master system, then the applications at client systems can be remotely checked for end-of-purpose. If there is no longer a landscape-wide data usage purpose, then the business partner personal data can be blocked at the master system. This change to the personal data status can be replicated to the client systems in order to block the business partner personal data landscape-wide. For calculation of retention time, the start-of-retention-time (SoRT) can be stored in a business partner specific table in the master and/or client systems. The business partner specific table can also be implemented in database 215. Landscape-wide blocked business partner master and client systems can independently perform erasure in database and archiving. Unblocking in multi-system landscape could be possible for specific business partner status, but should be considered very carefully.

For purposes of this discussion, computing system 220 is considered the master system and computing system 260 is considered the client system. However, their roles could be reversed, another system could be the master system, or control processor 210 can act as the master system and computing systems 220, 260 could both be client systems. As illustrated in Fig. 2, erasure of business partner personal data in a multi-system landscape starts with an end-of-purpose check by the master system's blocking component. This EoP check is performed locally in the master system and also remotely in the client system(s). Local and remote calls are executed synchronously. The EoP check returns a SoRT date for those systems where the business partner personal data purpose has ended. If the EoP returns are received from each application that accesses that business partner personal data landscape-wide, then the business partner personal data is blocked in the master system. This blocking is replicated asynchronously to the client systems in order to block the business partner personal data landscape-wide.

Blocking the business partner personal data can be achieved, for example, by setting a flag in the business partner specific table. The SoRT date can also be stored in the business partner specific table. For landscape-wide blocked business partner personal data, the master and client systems can independently perform erasure in the database located in their business partner data management component 240, 280, and archive the data via the retention management component 236, 276 in their respective ILM components 230, 270. This archiving (to archive stores 228, 268) can use enhanced data privacy processes.

The above-described procedure for blocking and erasing of business partners in multi-system landscape works can face a performance gap in productive systems where enormous amounts, e.g., perhaps millions, of business partner records are processed. For N business partners and M systems in an enterprise multi-system landscape, the number of remote calls for EoP check is represented by N x M. Remote calls are slower than local calls by up to a factor of 1000. Depending on the number of the business partners (N) and the involved systems (M), a full EoP could take weeks, months, or even years to process all records. However, implementation requirements of data privacy laws require near immediate blocking of the personal data when the EoP has been reached. Dedication of system resources for such a prolonged period could render the enterprise unable to perform its primary business functions.

The performance issue becomes more pronounced when the remote calls for end-of-purpose check are synchronous. Each remote synchronous call reserves memory and computing time on both the client and master systems until a result is returned. Therefore, a low number of remote synchronous calls can be simultaneously processed. Consequently parallel processing at the application server level is very limited. Even with the interface for the synchronous end-of-purpose check mass enabled in terms of processing groups of business partners instead of single records. However, any gain in performance improvement could be limited since processing too many records in one synchronous call can result in server-side time outs. These time outs can be due to application servers being configured to close connections after a very short time window if there is no activity on the connection.

In accordance with embodiments, the high number of business records to be processed and the number of synchronous remote calls is reduced so as to improve performance time and achieve the required data privacy implementation. This reduction in performance time can be achieved by doing as much as possible locally to avoid remote calls; doing as much possible asynchronously to avoid synchronous calls; and filtering the business partner data to reduce the number of data objects that are to be checked.

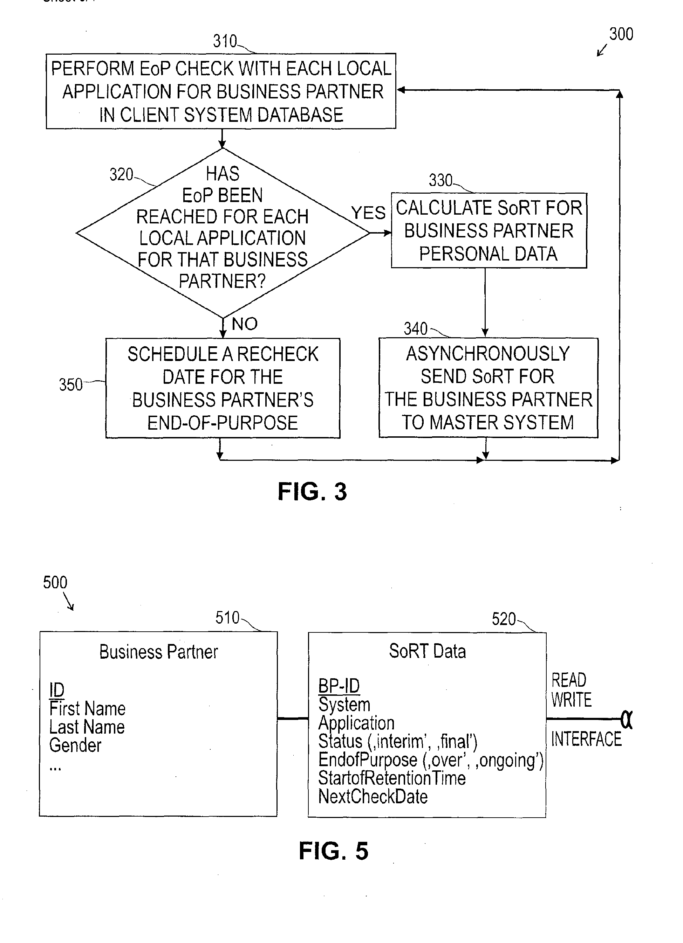

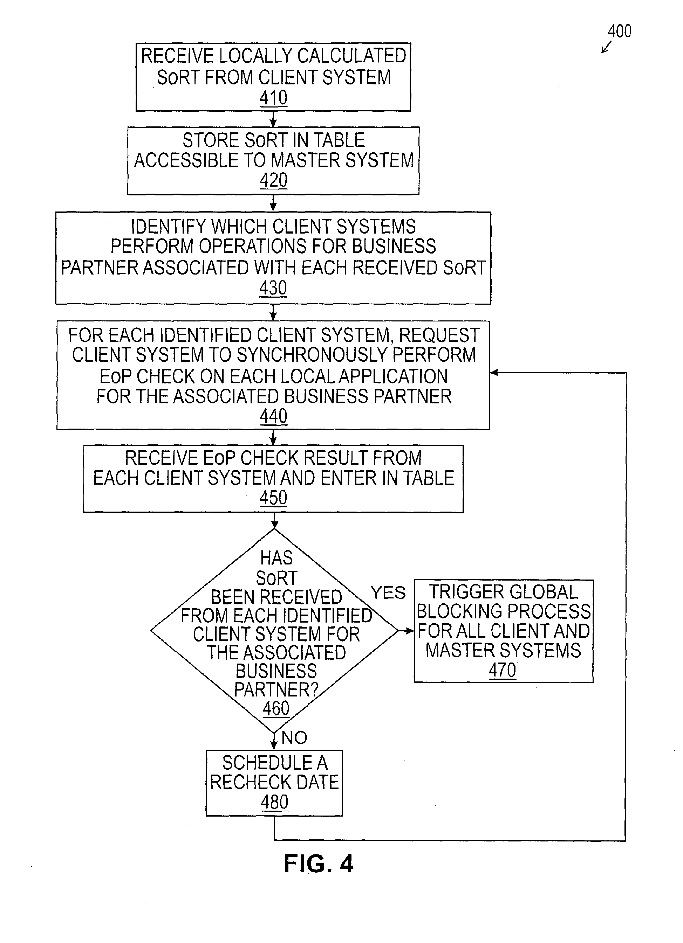

Figure 3 depicts process 300 for determining local SoRT at a client system level in accordance with an embodiment. Figure 4 depicts process 400 for both checking EoP and blocking business partner personal data landscape-wide at the master system in accordance with an embodiment. In combination, processes 300, 400 implement a two-prong algorithm to improve performance for landscape-wide blocking in accordance with some embodiments.

Process 300 begins with client sytems(s) performing, step 310, an EoP check of business partners in the system's local database. These periodic checks can be performed at periodic intervals that are responsive to local jurisdiction requirements for data privacy (e.g., daily, weekly, bi-weekly, monthly). In one implementation the EoP check can be initiated by receiving a synchronous request from a master system. Each application local to the client system is checked to confirm whether an end-of-purpose has been reached for each business partner.

In accordance with some embodiments, the client system can perform the EoP check asynchronously so as to provide to the master system an interim value regarding the status of a particular business partner with regard to applications local to that client system. As described below, the master system can implement a synchronous check landscape-wide to verify whether the interim results are still valid and to verify the EoP status for client systems that had not reported an interim result. The reported interim results can become invalid if, for example, the client system reporting the interim result began new business with the particular business partner and has reasons to access that business partner personal data record.

A check, step 320, is made to confirm whether the business partner has reached end-of-purpose for each local application. If the business partner has reached its EoP for all local applications, process 300 then calculates, step 330, the start-of-retention-time for the personal data associated with that business partner. The calculated SoRT is then sent, step 340, asynchronously to the master system. Because the business purpose for a business partner is over only if its purpose has ended in all involved systems of the multi-system landscape, the SoRT from each client system is an interim value and is consolidated landscape-wide at the master system. Process 300 can then return to step 310 to begin an end-of-purpose check for another business partner at the client system.

If at step 320 the business partner has not reached its EoP for any application at the client system, process 300 schedules a date, step 350, for rechecking the business partner's end-of-purpose at the client system. The recheck date can be based on that business partner's historical transactional data for the client system's applications. The recheck date can be used in the next run of the client system's local blocking process, where only those business partners where an end-of-purpose check makes sense to consider (e.g., next check date is equal to or greater than the day of running the blocking process). For local blocking jobs other filtering mechanisms can be considered, such as specifics regarding client system and/or application environments (e.g., consider only business partners from sales region A). Process 300 can then return to step 310 to begin an end-of-purpose check for another business partner at the client system, and/or wait for the recheck date of step 250 to arrive.

Figure 4 depicts process 400 for performing end-of-purpose checks and blocking business partner personal data at a landscape-wide level by the master system. Process 400 can be ongoing and operating parallel to process 300. The locally-calculated start-of-retention-time is received, step 410, at the master system. Global blocking for data privacy requirements is done only for business partner personal data that has reached an end-of-purpose in all systems of the enterprise multi-system computer landscape. The received SoRT is stored, step 420, in a SoRT data table accessible to the master system. The Sort data table contains records for each business partner, and can be implemented in the same datastore that contains database 215. The identity of each client system that performs operations using the business partner personal data associated with the received SoRT is determined, step 430. This determination can be made, for example, by querying a database containing information regarding all the business partners, applications that utilize business partner personal data, and the systems that implement the applications.

The master system requests, step 440, that each of the identified client systems synchronously perform an EoP check on each local application for the associated business partner. This synchronous check can be implemented at the client systems as process 300, described above. This synchronous check is performed as some client systems may have not yet sent a SoRT, or the SoRT sent from the client system might no longer be valid.

The master system receives an EoP check result, step 450, from each of the client systems, which is added to the record of the corresponding business partner in the SoRT data table. The master system processor performs a check to determine whether a SoRT has been received, step 460, from each client system identified in step 430 for the associated business partner. If a SoRT has been received from each identified client system, then process 400 triggers, step 470, a global blocking process. This global blocking process extends beyond the identified client systems and if successful can block all systems and applications from accessing the associated business partner's personal data records throughout the enterprise multi-system computer landscape. In accordance with an implementation, the global blocking process can delete the local business partner data record 242, 282, and archive the deleted record in archive store 228, 268. The archived business partner data record is then deleted from the archive at the end of the blocking period. If the check (step 460) determines that a SoRT has not been received from each identified client system (e.g., a SoRT is absent from an identified client system), then process 400 schedules a recheck date, step 480. If a determination is made that the received SoRT is invalid, then a recheck date can be scheduled.

In one implementation, the global blocking operation of process 400 can be executed at the master system on a regular basis (e.g., daily, weekly, monthly), or process 400 can be triggered when the master system receives a calculated SoRT from a client system (Fig. 3, step 340). Processes 300, 400 can be run as background processes, or timed to execute at low usage periods for each of the systems so as to further minimize burdening the overhead of the local systems and reduce traffic on the enterprise multi-system computer landscape network communication layer.

Figure 5 depicts a data model structure for SoRT data table 500 in accordance with some embodiments. As described above, the SoRT data table can store the start-of-retention-times returned to the master system from the client systems (Fig. 4, step 450). The table is a business partner specific table and can include an identity record 510 and a SoRT data record 520. The identity record can include data fields which identify the business partner - for example, a corporate entity record can include a name and a tax identity number; an individual entity record can include first and last names plus a gender field for verification. The Sort Data record can include data fields that identify the relevant systems and application where the start-of-retention-time was calculated; a status filed that could include "interim" or "final" to indicate the result of the end-of-purpose check performed by the system; the determined start-of-retention-time; and a field that contains the scheduled recheck date.

In accordance with an embodiment, a computer program application stored in non-volatile memory or computer-readable medium (e.g., register memory, processor cache, RAM, ROM, hard drive, flash memory, CD ROM, magnetic media, etc.) may include code or executable instructions that when executed may instruct or cause a controller or processor to perform methods discussed herein such as a method for implementing a combination of asynchronous and synchronous operations in a multi-system landscape in order to implement personal data retention and destruction scenarios as described above.

The computer-readable medium may be a non-transitory computer-readable media including all forms and types of memory and all computer-readable media except for a transitory, propagating signal. In one implementation, the non-volatile memory or computer-readable medium may be external memory.

Although specific hardware and data configurations have been described herein, note that any number of other configurations may be provided in accordance with embodiments of the invention. Thus, while there have been shown, described, and pointed out fundamental novel features of the invention as applied to several embodiments, it will be understood that various omissions, substitutions, and changes in the form and details of the illustrated embodiments, and in their operation, may be made by those skilled in the art without departing from the spirit and scope of the invention. Substitutions of elements from one embodiment to another are also fully intended and contemplated. The invention is defined solely with regard to the claims appended hereto, and equivalents of the recitations therein.

In an example the method as claimed may further include: storing each of the respective end-of-purpose check results in a data record associated with the particular business partner accessible to at least the first processor-controlled system and/or scheduling a recheck date for the data record associated with the particular business partner if a start-of-retention-time is not present from each of the identified other processor-controlled system.

## Claims

1. A computer-implemented method for managing personal data access in a multi-system computer landscape, the method comprising:
receiving at a first processor-controlled system of the multi-system computer landscape an end-of-purpose check result for a personal data record associated with a particular business partner, wherein the end-of-purpose check result is from a second processor-controlled system of the multi-system computer landscape and
the personal data record is located in a datastore in communication with at least the second processor-controlled system;
identifying other processor-controlled systems of the multi-system computer landscape that perform operations for the particular business partner if the end-of-purpose check result indicates a start-of-retention-time for the personal data record;
transmitting respective requests to each of the identified other processor-controlled systems to synchronously perform an end-of-purpose check for personal data records local to respective identified other process-controlled systems, wherein the local personal data records are associated with the particular business partner; and
receiving respective end-of-purpose check results from each of the identified other processor-controlled systems.

2. The method of claim 1, further including performing an end-of-purpose check for one or more local applications at the second processor-controlled system.

3. The method of claim 2, further including:
if an end-of-purpose is reached for the particular business partner with all local applications at the second processor-controlled system, calculating a start-of-retention time for the personal data associated with the particular business partner at the second processor-controlled system;
asynchronously returning the calculated start-of-retention time to the master system; and
if an end-of-purpose is not reached for the particular business partner with all local applications at the second processor-controlled system, scheduling a recheck date for the applications at the second processor-controlled system.

4. The method of any one of the preceding claims, further including storing the end-of-purpose check result in a data record associated with the particular business partner accessible to at least the first processor-controlled system.

5. The method of any one of the preceding claims, further including storing each of the respective end-of-purpose check results in a data record associated with the particular business partner.

6. The method of any one of the preceding claims, further including initiating a global blocking process for the particular business partner on each processor-controlled system of the multi-system computer landscape if a start-of-retention-time is present from each of the identified other processor-controlled systems in the data record associated with the particular business partner.

7. The method of claim 6, the global blocking process including:
sending asynchronous requests to each processor-controlled system of the multi-system computer landscape; and
instructing, via the requests, that local business partner data records associated with the particular business partner be archived in an archive store and deleted from each processor-controlled system.

8. The method of any one of the preceding claims, further including scheduling a recheck date for the data record associated with the particular business partner if a start-of-retention-time from each of the identified other processor-controlled systems is absent or invalid.

9. A non-transitory computer readable medium having stored thereon instructions which when loaded into a computer system and executed by a processor of the computer system cause the processor to perform the method of any one of the preceding claims.

10. A multi-system computer landscape comprising:
two or more processor-controlled systems in communication remotely via an electronic communication network;
at least one of the processor-controlled systems including a control processor configured to implement at least one of a business partner data management component, an information life cycle management component, and an application component;
at least one of the processor-controlled systems in communication with a datastore coupled to the electronic communication network;
a control processor in one of the processor-controlled systems configured to act as a master system, wherein the master system control processor is configured to identify other processor-controlled systems that include applications that access personal data for a particular business partner, transmit respective synchronous requests to the identified other processor-controlled systems to determine if applications have reached an end-of-purpose for the particular business partner, and perform a global blocking process if each of the other process-controlled systems indicate a start-of-retention time for the particular business partner.

11. The system of claim 10, the business partner data management component including an end-of-purpose interface component configured under processor control to perform verification of an application reaching its end of purpose for personal data records associated with a particular business partners.

12. The system of claim 10 or 11, the information lifecycle component including:
an archiving object component configured to archive information lifecycle management objects;
a blocking component configured to block access to the personal data records;
and
a retention management component configured to customize at least one of the residence rules and the retention time rules associated with the one or more of the applications.

13. The system of any one of claims 10 to 12, including a datastore coupled to the control processor, the storage device storing instructions configured to cause the processor to:
receive at a first processor-controlled system an end-of-purpose check result for a personal data record associated with a particular business partner, wherein the end-of-purpose check result is from a second processor-controlled system and the personal data record is located in the datastore;
identify other processor-controlled systems of the multi-system computer landscape that perform operations for the particular business partner if the end-of-purpose check result indicates a start-of-retention-time for the personal data record;
transmit respective requests to each of the identified other processor-controlled systems to asynchronously perform an end-of-purpose check for personal data records local to respective identified other process-controlled systems, wherein the local personal data records are associated with the particular business partner; and
receiving respective end-of-purpose check results from each of the identified other processor-controlled systems.
